# EUROPÄISCHE PATENTSCHRIFT

(11) **EP 2 513 512 B1**
(45) Veröffentlichungstag und Bekanntmachung des Hinweises auf die Patenterteilung: **05.06.2013**
(21) Anmeldenummer: 10742506.8
(22) Anmeldetag: 13.08.2010
(51) Int. Cl.: F16H 7/08, F16H 7/12

(54) **BEFESTIGUNGSAUGE FÜR EIN HYDRAULISCHES SPANNSYSTEM**
FIXING EYE FOR A HYDRAULIC TENSIONER
OEIL DE FIXATION D'UN TANDEUR HYDRAULIQUE

(30) Priorität: 26.09.2009 DE 102009043165
(43) Veröffentlichungstag der Anmeldung: 24.10.2012
(73) Patentinhaber: Schaeffler Technologies AG & Co. KG, 91074 Herzogenaurach (DE)
(72) Erfinder: HARTMANN, Bernd, 91085 Weisendorf (DE); KOWALSKI, Marco, 91074 Herzogenaurach (DE)
(86) Internationale Anmeldenummer: PCT/EP2010/061851
(87) Internationale Veröffentlichungsnummer: WO 2011/035984

(56) Entgegenhaltungen:
- DE-A1-102007 009 812
- DE-A1-102007 028 716
- US-A- 4 036 335
- US-A- 6 036 612

## Beschreibung

### Gebiet der Erfindung

Die vorliegende Erfindung betrifft ein Befestigungsauge eines einem Zugmitteltrieb zugeordneten hydraulischen Spannsystems, das ein Federelement umfasst, dessen Federenden jeweils einem Federteller zugeordnet sind. Das ein Drehlager oder eine Drehpunktlagerung bildende, zumindest zwei Befestigungselemente einschließende Befestigungsauge ist form- und/oder kraftschlüssig endseitig an einem Kolben und/oder an einem Zylinder einer Riemenspann-Komponente, insbesondere eines hydraulischen Spannsystems befestigt und weist einen zwei gegeneinander abgestützte Ringsegmente umfassenden Federteller auf, der im Bereich einer Trennebene der Ringsegmente eine Aussparung zur Aufnahme einer Befestigungslasche vorsieht.

### Hintergrund der Erfindung

Zum Antrieb verschiedener Einzelaggregate der Brennkraftmaschine, wie Wasserpumpe, Klimakompressor, Lenkhilfspumpe, ist vorzugsweise ein Zugmitteltrieb vorgesehen. Dazu verbindet ein Zugmittel, insbesondere ein Riemen, die einzelnen Riemenscheiben der anzutreibenden Aggregate, den Antriebsorganen, mit der Riemenscheibe des Abtriebsorgans, eine vorzugsweise mit der Kurbelwelle der Brennkraftmaschine in Verbindung stehende Riemenscheibe. Der schlupffreie Antrieb aller anzutreibenden Aggregate erfordert ein Spannsystem, mit dem eine ausreichende, vorzugsweise schlupffreie Vorspannung des Zugmittels sichergestellt werden kann.

Hydraulische Spannelemente werden bei Zugmitteltrieben für Brennkraftmaschinen eingesetzt und dienen zum Spannen eines Zugmittels, beispielsweise eines Riemens oder einer Kette. Das Spannelement umfasst einen Zylinder, der als ortsfestes und schwenkbar angeordnetes Gehäuseteil ausgebildet ist sowie einen Kolben, der direkt oder mittelbar mit einer Spannrolle verbunden ist, zwischen denen ein Federmittel angeordnet ist. Das Federmittel kann als Spiraldruckfeder ausgebildet sein.

Die außen liegende Druckfeder erfordert eine Reihenfolge bei der Montage, bei der die Befestigungsaugen zuletzt montiert werden. Die Befestigungsaugen müssen so montiert werden, dass eine sichere Übertragung der Federkraft gewährleistet ist. Auch im nicht eingebauten Zustand ist eine verliersichere Augenbefestigung erforderlich. Die Verbindung der Befestigungsaugen mit dem Kolben und dem Zylinder muss spielfrei sein. Schließlich wird eine hohe Schnalzfestigkeit gefordert, damit es nicht zu Beschädigungen kommt, wenn sich die Druckfeder schlagartig entspannt, zum Beispiel wenn das Montagewerkzeug versehentlich abrutscht.

Aus der US 6,036,612 ist ein hydraulisches Spannelement bekannt, bei dem ein Befestigungsauge mit der Kolbenstange über einen quer eingesetzten Stift verbunden ist. Das einstückig aufgebaute Befestigungsauge bildet einen Federteller, an dem das Federelement ohne eine Zentrierung oder Führung geradlinig abgestützt ist.

Ein Befestigungsauge der eingangs genannten Art ist aus der DE 10 2007 028 716 A1 bekannt.

### Aufgabe der Erfindung

Der vorliegenden Erfindung liegt die Aufgabe zugrunde, ein Befestigungsauge mit einer sicheren Führung und Krafteinleitung der Federkraft sowie eine Verliersicherung im nicht eingebauten Zustand zu schaffen.

Zur Lösung dieser Aufgabe erfolgt eine Kopplung aller Bauteile des Befestigungsauges über Haltemittel, bestehend aus zumindest zwei quer zu einer Längsachse des Befestigungsauges ausgerichteten Bolzen, die formschlüssig in miteinander korrespondierende Ausnehmungen der Ringsegmente und der Befestigungslasche eingebracht sind. Zur Erzielung einer optimierten Krafteinleitung beziehungsweise sicheren Übertragung der Federkraft in das jeweilige Befestigungsauge bilden die Ringsegmente des Federtellers einen zylindrischen Ansatz, der im Einbauzustand von Endwindungen des Federelementes umschlossen ist. Dieser erfindungsgemäße festigkeitsoptimierte Aufbau erfüllt weiterhin die Anforderungen hinsichtlich einer spielfreien, verliersicheren Befestigung bzw. Verbindung zwischen dem Federelement, einer Druckfeder, sowie dem Befestigungsauge. Gleichzeitig bietet der zylindrische Ansatz des Federtellers einen wirksamen Schutz vor Verschmutzung des Kolbens und des Zylinders, die innerhalb des Federelementes angeordnet sind. Zusammengefasst wird mit dem erfindungsgemäßen Befestigungsauge eine verstärkte Anbindung des Spannsystems an der Brennkraftmaschine sowie gleichzeitig eine erhöhte Lebensdauer erreicht.

Ältere vorteilhafte Ausgestaltungen der Erfindung sind Gegenstand der abhängigen Ansprüche 2 bis 12.

Um einen guten Halt des Befestigungsauges zu gewährleisten, ist erfindungsgemäß vorgesehen, dass wenigstens ein vorzugsweise alle Federteller formschlüssig mit einem Endbereich des Kolbens und / oder des Zylinders verbunden sind. Dabei umgreifen beide Ringsegmente eines Federtellers formschlüssig einen Endbereich des Kolbens und / oder des Zylinders. Dazu ist in jedem Ringsegment eine Aussparung, vorteilhaft zumindest abschnittsweise eine innere radiale Ringnut eingebracht, in die ein radial nach außen gerichteter Bordabschnitt, vorzugsweise ein umlaufender Bord eingreift oder lokal radial ausgerichtete Vorsprünge des Kolbens und / oder des Zylinders verrasten.

Im Bereich der Trennungsebene zwischen den Ringsegmenten ist bevorzugt eine quadratische oder rechteckförmige Aussparung vorgesehen, die zur Aufnahme der Befestigungslasche bestimmt ist. Zur Erreichung einer passgenauen Verbindung korrespondiert das Profil der Aussparung mit dem Querschnittsprofil der Befestigungslasche.

Als Ergänzung und Sicherung der formschlüssigen Verbindung zwischen den einzelnen Bauteilen des Befestigungsauges bietet es sich an, eine Rast-, Klemm- oder Schnappverbindung vorzusehen.

Zur Gewichtsoptimierung sind die den Federteller bildenden Ringsegmente sowie die Befestigungslasche aus einem Kunststoff hergestellt. Dazu eignet sich bevorzugt ein armierter, glasfaserverstärkter Kunststoff. Zur Darstellung eines kostenoptimierten Bauteils sind diese Bauteile als Spritzgussteile ausgebildet. Weiterhin kann als Werkstoff Stahl oder ein Stahlblech eingesetzt werden. Alternativ dazu bietet es sich an, die Ringsegmente sowie die Befestigungslasche aus Druckguss herzustellen.

Die Erfindung schließt weiterhin eine aus unterschiedlichen Werkstoffen hergestellte Bauteilekombination ein. Als Werkstoff für den oder die Bolzen, der zur formschlüssigen Verbindung der Ringsegmente und der Befestigungslasche bestimmt ist, kann ebenfalls Kunststoff oder Stahl verwendet werden.

Die Beanspruchung des Bolzens berücksichtigend, kann das Querschnittsprofil entsprechend ausgewählt werden. Dazu bietet sich bevorzugt ein gerundetes oder ovales Querschnittsprofil an. Für ein ovales Profil ist die größte Ovalität übereinstimmend mit der Kraftrichtung des Federelementes ausgerichtet.

Eine weitere vorteilhafte Ausgestaltung der Erfindung sieht vor, die Befestigungslasche an dem vom Federteller abgewandten Ende gerundet auszubilden. Ergänzend dazu ist dieser gerundete Bereich mit einer beidseitig überstehenden Abdeckung versehen. Diese Maßnahme bietet ebenfalls einen Schutz vor Verschmutzung für das Befestigungsauge, das bevorzugt in Verbindung mit einer Verschraubung ein Drehlager bildet, zur gelenkigen Anbindung des Spannsystems beispielsweise an dem Gehäuse einer Brennkraftmaschine.

Als Maßnahme, um ein vereinfachtes Zusammenrücken des Federelements zu erreichen, schließt jedes Federelement zumindest eine zu dem Federelement gerichtete lokale Aussparung ein. In Verbindung mit einem separaten Werkzeug, das in die Aussparungen eingreift, kann das Federelement zusammengedrückt werden. Vorzugsweise sind dazu die Aussparungen annähernd in einer Flucht liegend in den Ringssegmenten der gegenüberliegenden Federteller eingebracht.

### Kurze Beschreibung der Zeichnungen

Weitere Vorteile und Einzelheiten der Erfindung werden nachfolgend anhand von Ausführungsbeispielen unter Bezugnahme auf die Figuren beschrieben. Die Figuren sind schematische Darstellungen, es zeigen:
- Fig. 1: in einer Ansicht ein hydraulisches Spannsystem für einen Zugmitteltrieb in Verbindung mit erfindungsgemäß ausgebildeten Befestigungsaugen;
- Fig. 2: ein Befestigungsauge gemäß Fig. 1 in einer vergrößerten Darstellung im Halbschnitt;
- Fig. 3: eine Befestigungslasche des Befestigungsauges in einer Perspektive;
- Fig. 4: ein Ringelement in Verbindung mit Bolzen des Befestigungsauges in einer Perspektive;
- Fig. 5: ein Befestigungsauge in einer Schnittansicht entlang einer Einbaulage des Bolzens;
- Fig. 6: ein Befestigungsauge, dessen gerundete Befestigungslasche eine beidseitig überstehende Abdeckung aufweist.

### Ausführliche Beschreibung der Zeichnungen

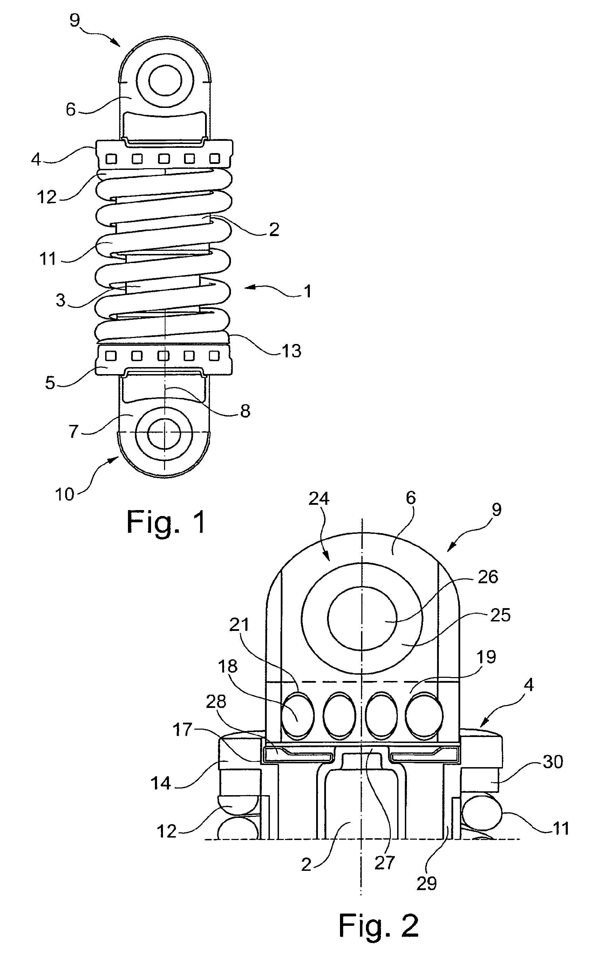

Die Figur 1 zeigt ein hydraulisches Spannsystem 1 für einen Zugmitteltrieb in einer Ansicht. Das Spannsystem 1 umfasst einen Zylinder 2, in dem ein Kolben 3 verschiebbar geführt ist. Im Betriebszustand des Spannsystems kommt es abhängig von einer Richtung einer linearen Bewegung zwischen dem Kolben 3 und dem Zylinder 2 zu einem Hydraulikfluid-Austausch zwischen einem von dem Zylinder 2 und dem Kolben 3 begrenzten Druckraum in den Vorratsraum oder in umgekehrter Richtung. Übereinstimmend ist sowohl dem Zylinder 2 als auch dem Kolben 3 jeweils ein Federteller 4,5 zugeordnet, der gemeinsam mit einer Befestigungslasche 6,7 in einer Längsachse 8 angeordnete Befestigungsaugen 9,10 bilden, die ein Drehlager einschließen. Über die Befestigungsaugen 9,10 ist das Spannsystem 1 beispielsweise an einer Brennkraftmaschine gelenkig befestigt. Zur Erzielung einer Spreizkraft zwischen den Befestigungsaugen 9,10 ist ein Federelement 11 vorgesehen, das über Federenden 12,13 an den Federtellern 4,5 kraftschlüssig abgestützt ist.

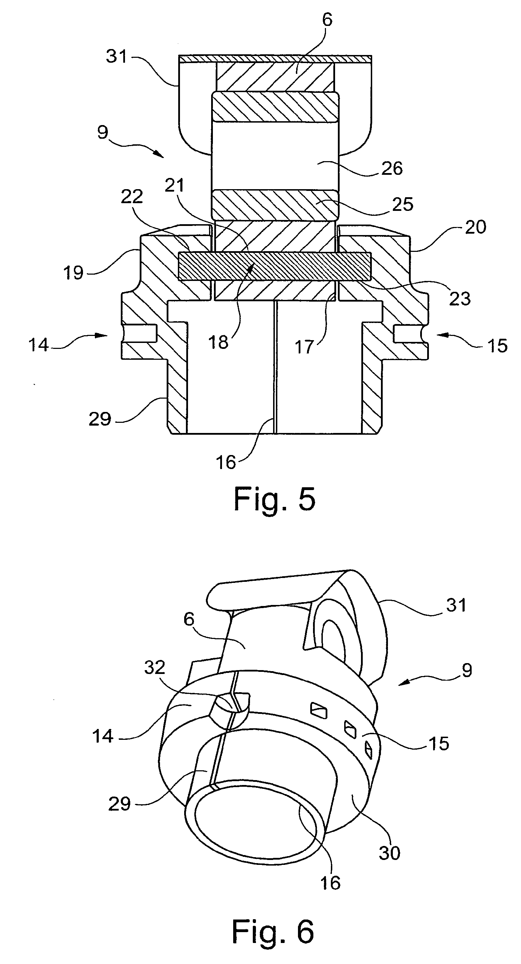

In der Figur 2 ist das Befestigungsauge 6 vergrößert in einer Schnittdarstellung abgebildet. Dabei wird insbesondere die Verbindung zwischen der Befestigungslasche 6 und dem Federteller 4 verdeutlicht. Der Federteller 4 wird, wie in Figur 5 dargestellt, aus zwei Ringsegmenten 14,15 gebildet, die über eine Trennebene 16 abgestützt sind. Eine Aussparung 17 der Ringsegmente 14,15 im Bereich der Trennebene 16 dient zur Aufnahme der Befestigungslasche 6. Über insgesamt vier zueinander versetzt angeordnete Bolzen 18 ist die Befestigungslasche 6 jeweils mit einem Bord 18,19 der Ringsegmente 14,15 verbunden. Die Bolzen 18 sind dazu in Ausnehmungen 21 der Befestigungslasche 6 eingesetzt, deren Größe und Lage mit Ausnehmungen 22, 23 der Borde 19,20 übereinstimmt. Zur Bildung eines Drehlagers 24 schließt die Befestigungslasche 6 eine Lagerbuchse 25 ein, deren Bohrung 26 beispielsweise zur Aufnahme einer Befestigungsschraube vorgesehen ist. Eine Befestigung des Zylinders 2 an dem Befestigungsauge 6 erfolgt über einen zentralen Ansatz 27, der in einer Bohrung einer separaten Scheibe 28 eingreift, welche in der Aussparung 17 der Ringsegmente 14,15 lagefixiert ist. Die Ringsegmente 14,15 bilden gemeinsam einen zylindrischen Ansatz 29, der außenseitig von Endwindungen des Federelementes 11 kraftschlüssig umschlossen ist, zur Bildung einer Verliersicherung im vormontierten Zustand des Spannsystems 1. Zur axialen Abstützung des Federelementes 11 bildet das Ringsegment 14 eine dem Verlauf des Federendes 12 entsprechende Anlage 30.

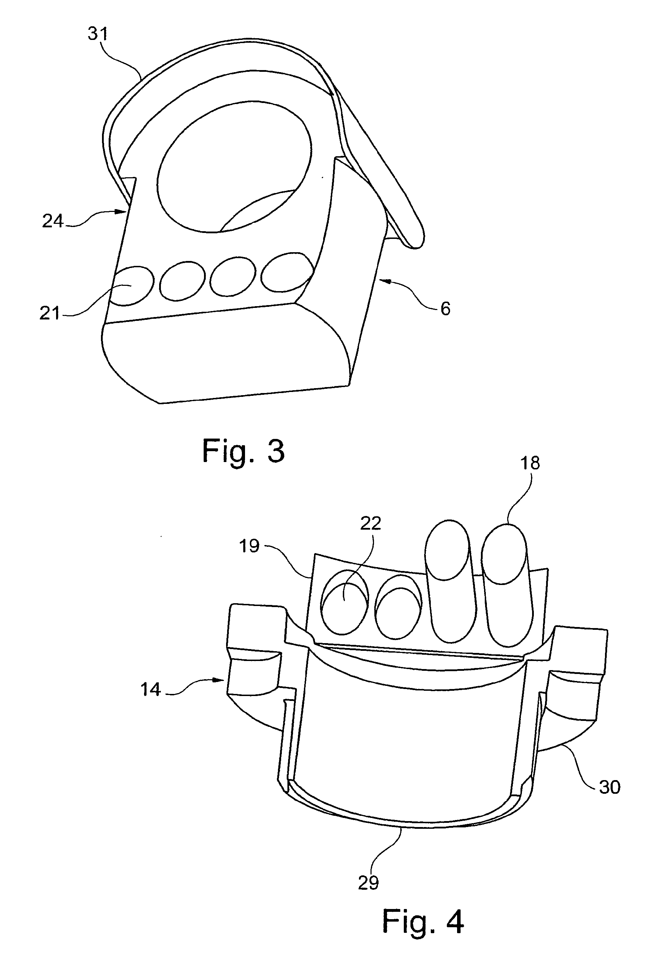

Die in Figur 3 als Einzelteil in einer Perspektive abgebildete Befestigungslasche 6 bildet drehlagerseitig ein gerundetes Ende, das von einer beidseitig überstehenden Abdeckung 31 umschlossen ist. Die Abdeckung bewirkt einen wirksamen Schutz des Drehlagers 24 gegenüber Verschmutzungen.

Aus der Figur 4 ist in einer Ansicht das Ringsegment 14 in der Perspektive dargestellt. Diese Darstellung zeigt insbesondere die Anordnung der ein ovales Querschnittsprofil aufweisenden Bolzen 18 in dem Bord 19 des Ringsegmentes 14. Die Bolzen 18 sind dabei so angeordnet, dass deren größter Ovaldurchmesser übereinstimmend mit der Längsachse 8 verläuft.

Die Figur 5 zeigt das Befestigungsschraube 6 im Halbschnitt und verdeutlicht die Einbaulage von dem Bolzen 18. Im Betriebszustand des Spannsystems 1 sind die Ringsegmente 14,15 bedingt durch die Radialkraft des Federelementes 17, das den zylindrischen Ansatz 29 kraftschlüssig umschließt, über die Trennebene 16 abgestützt. Dadurch stellt sich eine verliergesicherte Einbaulage der Bolzen 18 ein, die jeweils in sacklochartig ausgeführte Ausnehmungen 22,23 der Borde 19,20 der Ringsegmente 14,15 eingesetzt sind.

In Figur 6 ist das Befestigungsauge 9 mit einer Aussparung 32 versehen, die im Bereich der Anlage 30 des Ringsegments 14 eingebracht ist. Die Aussparung 32 dient zur vereinfachten Aufnahme eines Werkzeugs, das gleichzeitig in eine weitere Aussparung 32 des zugehörigen weiteren Befestigungsauges 10 des Spannsystems 1 eingreift, mit dem das Federelement 11 zusammengepresst werden kann, um eine Montage des Zugmittels zu vereinfachen.

### Bezugszahlenliste

| | |
|---|---|
| 1 | Spannsystem |
| 2 | Zylinder |
| 3 | Kolben |
| 4 | Federteller |
| 5 | Federteller |
| 6 | Befestigungslasche |
| 7 | Befestigungslasche |
| 8 | Längsachse |
| 9 | Befestigungsauge |
| 10 | Befestigungsauge |
| 11 | Federelement |
| 12 | Federende |
| 13 | Federende |
| 14 | Ringsegment |
| 15 | Ringsegment |
| 16 | Trennebene |
| 17 | Aussparung |
| 18 | Bolzen |
| 19 | Bord |
| 20 | Bord |
| 21 | Ausnehmung |
| 22 | Ausnehmung |
| 23 | Ausnehmung |
| 24 | Drehlager |
| 25 | Lagerbuchse |
| 26 | Bohrung |
| 27 | Ansatz |
| 29 | Scheibe |
| 30 | Anlage |
| 31 | Abdeckung |
| 32 | Aussparung |

## Patentansprüche

1. Befestigungsauge eines einem Zugeordneten hydraulischen Spannsystems, das ein Federelement umfasst, dessen Federenden jeweils einem Federteller zugeordnet sind, wobei das zumindest zwei Befestigungselemente einschließende Befestigungsauge (9, 10) form- und/oder kraftschlüssig endseitig an einem Kolben (3) und/oder an einem Zylinder (2) des hydraulischen Spannsystems (1) oder einer Riemenspann-Komponente befestigt ist und einen zwei gegeneinander abgestützte Ringsegmente (14, 15) umfassenden Federteller (4, 5) aufweist, der im Bereich einer Trennebene (16) eine Aussparung (17) zur Aufnahme einer Befestigungslasche (6, 7) vorsieht, **dadurch gekennzeichnet, dass** eine Kopplung aller Bauteile des Befestigungsauges (9, 10) über Haltemittel erfolgt, bestehend aus zumindest zwei quer zu einer Längsachse (8) des Befestigungsauges (9, 10) ausgerichteten Bolzen (18), die fiormschlüssig in miteinander korrespondierende Ausnehmungen (21, 22, 23) der Ringsegmente (14, 15) und der Befestigungslasche (6, 7) eingebracht sind, und die Ringsegmente (14, 15) des Federtellers (4, 5) einen zylindrischen Ansatz (29) bilden, der im Einbauzustand von Endwindungen des Federelementes (11) umschlossen ist.

2. Befestigungsauge nach Anspruch 1, **dadurch gekennzeichnet, dass** eine Befestigung des Kolbens (3) und/oder des Zylinders (2) an dem Federteller (4, 5) mittels einer separaten, dem Ringsegment (14, 15) zugeordneten Scheibe (28) erfolgt oder der Federteller (4, 5) beziehungsweise das Ringsegment (14, 15) einen Endbereich des Kolbens (3) und/oder des Zylinders (2) unmittelbar formschlüssig umschließt.

3. Befestigungsauge nach Anspruch 2, **dadurch gekennzeichnet, dass** das Ringsegment (14, 15) zumindest eines Federtellers (4, 5) eine innere radiale Aufnahme oder Nut aufweist, in die ein mittelbar oder unmittelbar mit dem Kolben und / oder dem Zylinder verbundener radialer Bord oder lokaler Vorsprung formschlüssig eingreift.

4. Befestigungsauge nach zumindest einem der Ansprüche 1 bis 3, **dadurch gekennzeichnet, dass** eine quadratische oder rechteckförmige Ausnehmung (21, 22, 23) oder Aussparung in der Trennungsebene (16) der Ringsegmente (14, 15) vorgesehen ist, die zur Aufnahme der Befestigungslasche bestimmt ist.

5. Befestigungsauge nach zumindest einem der Ansprüche 1 bis 4, **dadurch gekennzeichnet, dass** über eine Rast-, Klemm- oder Schnappverbindung die Bauteile des Befestigungsauges (9, 10) miteinander verbunden sind.

6. Befestigungsauge nach zumindest einem der Ansprüche 1 bis 5, **dadurch gekennzeichnet, dass** die Bolzen (18) zur formschlüssigen Verbindung der Ringsegmente (14, 15) und der Befestigungslasche (6, 7) aus Kunststoff oder aus Stahl hergestellt sind.

7. Befestigungsauge nach zumindest einem der Ansprüche 1 bis 6, **dadurch gekennzeichnet, dass** zumindest ein Bauteil des Befestigungsauges (9, 10) als Druckgussteil oder Spritzgussteil ausgebildet ist.

8. Befestigungsauge nach zumindest einem der Ansprüche 1 bis 7, **dadurch gekennzeichnet, dass** die Bauteile des Befestigungsauges (9, 10) aus übereinstimmenden oder voneinander abweichenden Werkstoffen hergestellt sind.

9. Befestigungsauge nach Anspruch 1, **dadurch gekennzeichnet, dass** der Bolzen (18) ein gerundetes oder ovales Querschnittsprofil aufweisen.

10. Befestigungsauge nach zumindest einem der Ansprüche 1 bis 9, **dadurch gekennzeichnet, dass** die Befestigungslasche (6, 7) an dem vom Federteller (4, 5) abgewandten Ende gerundet ausgebildet sind.

11. Befestigungsauge nach Anspruch 10, **dadurch gekennzeichnet, dass** der äußere gerundete Bereich der Befestigungslasche (6, 7) eine beidseitig überstehende Abdeckung (31) aufweist.

12. Befestigungsauge nach zumindest einem der Ansprüche 1 bis 11, **dadurch gekennzeichnet, dass** zumindest ein Ringssegment (14, 15) außenseitig eine zu dem Federelement (11) gerichtete lokale Aussparung (32) aufweist.

## Claims

1. Fastening socket of a hydraulic tensioning system which is assigned to a traction mechanism drive and comprises a spring element, the spring ends of which are in each case assigned to a spring collar, the fastening socket (9, 10) which includes at least two fastening elements being fastened in a positively locking and/or non-positive manner on the end side to a piston (3) and/or to a cylinder (2) of the hydraulic tensioning system (1) or a belt tensioning component and having a spring collar (4, 5) which comprises two annular segments (14, 15) which are supported with respect to one another, which spring collar (4, 5) provides a cut-out (17) for receiving a fastening bracket (6, 7) in the region of a dividing plane (16), **characterized in that** all the components of the fastening socket (9, 10) are coupled via holding means, comprising at least two pins (18) which are oriented transversely with respect to a longitudinal axis (8) of the fastening socket (9, 10) and are introduced in a positively locking manner in mutually corresponding recesses (21, 22, 23) of the annular segments (14, 15) and of the fastening bracket (6, 7), and the annular segments (14, 15) of the spring collar (4, 5) form a cylindrical projection (29) which is enclosed in the installed state by end turns of the spring element (11).

2. Fastening socket according to Claim 1, **characterized in that** the piston (3) and/or the cylinder (2) is fastened to the spring collar (4, 5) by means of a separate washer (28) which is assigned to the annular segment (14, 15), or the spring collar (4, 5) or the annular segment (14, 15) directly encloses an end region of the piston (3) and/or of the cylinder (2) in a positively locking manner.

3. Fastening socket according to Claim 2, **characterized in that** the annular segment (14, 15) of at least one spring collar (4, 5) has an inner radial receptacle or groove, into which a radial rim or local projection which is connected indirectly or directly to the piston and/or the cylinder engages in a positively locking manner.

4. Fastening socket according to at least one of Claims 1 to 3, **characterized in that** a square or rectangular recess (21, 22, 23) or cut-out is provided in the dividing plane (16) of the annular segments (14, 15), which recess (21, 22, 23) or cut-out is designed to receive the fastening bracket.

5. Fastening socket according to at least one of Claims 1 to 4, **characterized in that** the components of the fastening socket (9, 10) are connected to one another via a latching, clamping or snap-action connection.

6. Fastening socket according to at least one of Claims 1 to 5, **characterized in that** the pins (18) for connecting the annular segments (14, 15) and the fastening bracket (6, 7) in a positively locking manner are produced from plastic or from steel.

7. Fastening socket according to at least one of Claims 1 to 6, **characterized in that** at least one component of the fastening socket (9, 10) is configured as a die-cast part or as an injection-moulded part.

8. Fastening socket according to at least one of Claims 1 to 7, **characterized in that** the components of the fastening socket (9, 10) are produced from materials which correspond to one another or differ from one another.

9. Fastening socket according to Claim 1, **characterized in that** the pin (18) has a rounded or oval cross-sectional profile.

10. Fastening socket according to at least one of Claims 1 to 9, **characterized in that** the fastening bracket (6, 7) is of rounded configuration at the end which faces away from the spring collar (4, 5).

11. Fastening socket according to Claim 10, **characterized in that** the outer rounded region of the fastening bracket (6, 7) has a cover (31) which projects on both sides.

12. Fastening socket according to at least one of Claims 1 to 11, **characterized in that** at least one annular segment (14, 15) has, on the outside, a local cut-out (32) which is directed towards the spring element (11).

## Revendications

1. Oeil de fixation d'un système tendeur hydraulique associé à un entraînement à moyen de traction, lequel système tendeur comporte un élément de ressort dont les extrémités de ressort sont respectivement associées à une coupelle de ressort, l'oeil de fixation (9, 10) contenant au moins deux éléments de fixation étant fixé du côté de son extrémité, par engagement par coopération de formes et/ou par force, à un piston (3) et/ou à un cylindre (2) du système tendeur hydraulique (1) ou à un composant tendeur de courroie et comprenant une coupelle de ressort (4, 5) comportant deux segments annulaires (14, 15) appuyés l'un contre l'autre, sur laquelle coupelle de ressort est prévue une cavité (17) dans la région d'un plan de séparation (16), pour recevoir une patte de fixation (6, 7), **caractérisé en ce qu'**un accouplement de toutes les parties structurales de l'oeil de fixation (9, 10) s'effectue par le biais de moyens de retenue constitués d'au moins deux goupilles (18) orientées transversalement par rapport à un axe longitudinal (8) de l'oeil de fixation (9, 10), lesquelles goupilles sont insérées par engagement par coopération de formes dans des évidements (21, 22, 23) correspondant les uns aux autres des segments annulaires (14, 15) et de la patte de fixation (6, 7) et les segments annulaires (14, 15) de la coupelle de ressort (4, 5) forment une saillie cylindrique (29) qui, à l'état monté, est entourée par des spires d'extrémité de l'élément de ressort (11).

2. Oeil de fixation selon la revendication 1, **caractérisé en ce qu'**une fixation du piston (3) et/ou du cylindre (2) à la coupelle de ressort (4, 5) s'effectue au moyen d'un disque (28) séparé associé au segment annulaire (14, 15), ou la coupelle de ressort (4, 5) ou le segment annulaire (14, 15) entoure directement par engagement par coopération de formes une région d'extrémité du piston (3) et/ou du cylindre (2).

3. Oeil de fixation selon la revendication 2, **caractérisé en ce que** le segment annulaire (14, 15) d'au moins une coupelle de ressort (4, 5) comprend un logement ou une rainure radial(e) intérieur(e) dans lequel/laquelle s'engage par coopération de formes un bord radial ou une saillie locale relié(e) directement ou indirectement au piston et/ou au cylindre.

4. Oeil de fixation selon au moins l'une quelconque des revendications 1 à 3, **caractérisé en ce qu'**un évidement (21, 22, 23) ou une cavité quadrangulaire ou rectangulaire est prévu(e) dans le plan de séparation (16) des éléments annulaires (14, 15), lequel évidement ou laquelle cavité est destiné(e) à recevoir la patte de fixation.

5. Oeil de fixation selon au moins l'une quelconque des revendications 1 à 4, **caractérisé en ce que** les parties structurales de l'oeil de fixation (9, 10) sont reliées les unes aux autres au moyen d'une liaison par encliquetage, serrage ou clipsage.

6. Oeil de fixation selon au moins l'une quelconque des revendications 1 à 5, **caractérisé en ce que** les goupilles (18) pour la liaison par engagement par coopération de formes des segments annulaires (14, 15) et de la patte de fixation (6, 7) sont fabriquées en plastique ou en acier.

7. Oeil de fixation selon au moins l'une quelconque des revendications 1 à 6, **caractérisé en ce qu'**au moins une partie structurale de l'oeil de fixation (9, 10) est réalisée sous forme de pièce coulée sous pression ou de pièce moulée par injection.

8. Oeil de fixation selon au moins l'une quelconque des revendications 1 à 7, **caractérisé en ce que** les parties structurales de l'oeil de fixation (9, 10) sont fabriquées en matières identiques ou différentes les unes des autres.

9. Oeil de fixation selon la revendication 1, **caractérisé en ce que** les goupilles (18) présentent un profil en section transversale arrondi ou ovale.

10. Oeil de fixation selon au moins l'une quelconque des revendications 1 à 9, **caractérisé en ce que** les pattes de fixation (6, 7) sont arrondies aux extrémités opposées à la coupelle de ressort (4, 5).

11. Oeil de fixation selon la revendication 10, **caractérisé en ce que** la région extérieure arrondie de la patte de fixation (6, 7) comprend un recouvrement (31) faisant saillie des deux côtés.

12. Oeil de fixation selon au moins l'une quelconque des revendications 1 à 11, **caractérisé en ce qu'**au moins un segment annulaire (14, 15) comprend, du côté extérieur, une cavité locale (32) orientée en direction de l'élément de ressort (11).
